# EUROPEAN PATENT SPECIFICATION

(11) **EP 4 064 742 B1**
(45) Date of publication and mention of the grant of the patent: **09.04.2025**
(21) Application number: 20889818.9
(22) Date of filing: 11.11.2020
(51) Int. Cl.: H04W 24/08, H04W 24/10, H04W 76/19, H04W 8/02, H04W 88/06, H04W 36/00

(54) **INFORMATION REPORTING AND PROCESSING METHOD AND CORRESPONDING TERMINAL AND NETWORK SIDE APPARATUS**
INFORMATIONSMELDUNGS- UND VERARBEITUNGSVERFAHREN, UND ZUGEHÖRIGES ENDGERÄT UND NETZWERKSEITIGES GERÄT
PROCÉDÉ DE SIGNALEMENT ET DE TRAITEMENT D'INFORMATIONS, TERMINAL ET APPAREIL CÔTÉ RÉSEAU CORRESPONDANTS

(30) Priority: 18.11.2019 CN 201911127886
(43) Date of publication of application: 28.09.2022
(73) Proprietor: Datang Mobile Communications Equipment Co., Ltd., Beijing 100085 (CN)
(72) Inventor: YAN, Nan, Beijing 100083 (CN); LIU, Aijuan, Beijing 100083 (CN); WANG, Ruiwei, Beijing 100083 (CN)
(74) Representative: Maiwald GmbH
(86) International application number: PCT/CN2020/128104
(87) International publication number: WO 2021/098569

(56) References cited:
- EP-A1- 3 122 098
- WO-A1-2019/134669
- US-A1- 2013 165 108
- US-A1- 2019 045 349
- HUAWEI: "IRAT too late", 3GPP DRAFT; R3-112376 IRAT TOO LATE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Zhuhai; 20111010, 30 September 2011 (2011-09-30), XP050542065
- HUAWEI: "LTE inter RAT MRO", 3GPP DRAFT; R3-120121 LTE INTER RAT MRO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Dresden, Germany; 20120206 - 20120210, 30 January 2012 (2012-01-30), XP050566492
- R3-197668: "LS on information needed for MRO in UE RLF Report", 3GPP TSG-RAN WG3 MEETING #106, R3-197668, 22 November 2019 (2019-11-22), XP051830925
- ERICSSON: "Reporting RLM related issues upon handover and access to the target cell", 3GPP TSG-RAN WG3 #103, R3-190834, 1 March 2019 (2019-03-01), XP051604768
- CMCC: "Discussion on NR MDT accessibility information reporting", 3GPP TSG-RAN WG2 MEETING #106, R2-1905940, 17 May 2019 (2019-05-17), XP051710286

## Description

### CROSS-REFERENCE TO RELATED APPLICATION

This application claims a priority of the Chinese patent application No. 201911127886.5 filed on November 18, 2019.

### TECHNICAL FIELD

The present disclosure relates to the field of communications technology, in particular to an information reporting method, an information processing method, an information reporting device, an information processing device.

### BACKGROUND

When a radio link problem occurs in a UE in a connected state, a Radio Link Failure (RLF) may be triggered, and when a problem occurs in the UE in a handover process, a Handover Failure (HOF) may be triggered. In the case of the HOF, the UE will try to select a cell to initiate a connection reestablishment procedure. The UE may record various parameters when the RLF or the HOF occurs in the UE, and report them to a network side in a subsequent procedure or subsequent procedures for the subsequent optimization at the network side.

When the UE in an idle state initiates a connection establishment procedure and a problem occurs in the UE, it may return to the idle state, and record relevant parameters when the failure occurs. When the UE in an inactive state indicates a connection resume procedure and a problem occurs in the UE, it may also record relevant parameter information when the failure occurs. The two cases both belong to a Connection Establishment Failure (CEF). When the UE establishes the connection subsequently or after the UE has established the connection, the UE may report the relevant record to the network side for the subsequent optimization at the network side.

Currently, a procedure of reporting the RLF/HOR/CEF is described as follows. When the failure-related information has been stored in the UE, the UE may report an availability indication in uplink signaling, e.g., a connection establishment completion message, a connection resume completion message or a handover completion message, so as to indicate the network side that the failure-related information is stored in the UE.

The network side may transmit a request to the UE, so as to request the UE to report the information. Usually, the signaling is a UE information request message. Upon the receipt of the request message from the network side, the terminal may transmit the failure-related record to the network side. Usually, the signaling is a UE information response message.

When the UE has reported the availability indication but the network side fails to transmit the request, the UE may store the record for at most 48 hours, and the availability indicator may be carried in each completion message within 48 hours. The network side may determine whether and when the UE is requested to transmit the failure-related information in accordance with the practical needs.

Upon the receipt of the record reported by the UE, the network side may parse the record to obtain an original cell where the failure actually occurs in the UE (i.e., a cell where the UE is located when the failure-related information is recorded), and transmit, through an interface message, the record received from the UE to the original cell where the failure actually occurs in the UE for the optimization of parameters of the original cell. In a Long Term Evolution (LTE) system, the related information may be transmitted only when there is an X2 interface between base stations. In a New Radio (NR) system, the failure-related information reported by the UE is transmitted directly through an RLF indication message when there is an X2/Xn coupled to a same core network device, the base station where the failure occurs in the UE may also be directly found through the core network device, so as to transmit back the information.

In existing interactive behaviors, the failure-related information may be transmitted back through the X2 or Xn interface or through the same core network device. However, in the case that the base station where a failure content is actually recorded by the UE and the other base station where an access content is reported by the UE are spaced far away from each other and do not belong to a same core network node, or in the case that the information is reported in an inter-system manner, the network to which the failure-related information is reported by the UE needs to route the failure-related information to the original cell where the failure occurs in the UE. In the information currently reported by the UE, a content related to a network identifier merely includes a Cell Global Identifier (CGI) of the cell where the failure occurs in the UE. However, when the information is reported in an inter-system manner or an intra-Radio Access Technology (RAT) manner but the base stations belong to different core network devices, it is impossible for a current base station to find the original cell for the UE directly in accordance with the CGI. US2013/165108A1 discloses a method for detecting a cause for a Radio Link Failure (RLF) or handover failure. In an example, this document teaches that a base station which detects a problem sends a corresponding Mobility Robustness Optimization (MRO) report to the base station which triggers the too early, too late or handover to a wrong cell/RAT. The MRO report comprises type of a target RAT of the last handover, or comprises the cell identifier of the target cell of the last handover, and can further contain a LAI and an RAC or a TAI at which the target cell is located; the MRO message can further comprise an inter-RAT handover problem indication. "IRAT too late" (R3-112376) discusses remaining requirements for the solution for Inter RAT too late detection. WO2019/134669A1 discloses a handling method for radio link failure. "LTE inter RAT MRO" (R3-120121) discusses remaining requirements for the solution for Inter RAT too late detection.

### SUMMARY

The invention is set out in the appended set of claims. An object of the present disclosure is to provide an information reporting method, as defined in claim 1, an information processing method, as defined in claim 4, an information reporting device of a UE, as defined in claim 7, and an information processing device of a second network side device, as defined in claim 10, so as to solve the problem in the related art where it is impossible for a network receiving failure-related information reported by the UE to route the failure-related information to an original cell where a failure occurs in the UE in some scenarios.

The present disclosure at least has the following beneficial effects.

According to the information reporting method, the information processing method, the UE, the network side device and the core network device in the embodiments of the present disclosure, the failure-related information generated when the failure occurs in the UE carries therein the TA information about the first network side device where the failure occurs in the UE, so that, in the case that the first network side device and the second network side device belong to different core network devices, the second core network device to which the second network side device belongs determines the first core network device to which the first network side device belongs in accordance with the TA information, and the failure-related information is transmitted to the first network side device through the first core network device. As a result, it is able to solve the problem that it is impossible for the second network side device to transmit the failure-related information to the first network side device when the second network side device fails to know routing-related information about a node where the failure-related information is recorded by the UE.

### BRIEF DESCRIPTION OF THE DRAWINGS

FIG. 1 is a flow chart of an information reporting method according to one embodiment of the present disclosure;
FIG. 2 is a flow chart of an information processing method according to one embodiment of the present disclosure;
FIG. 3 is another flow chart of the information processing method according to one embodiment of the present disclosure;
FIG. 4 is a schematic view showing the interaction according one embodiment of the present disclosure;
FIG. 5 is a schematic view showing an information reporting device according to one embodiment of the present disclosure;
FIG. 6 is a schematic view showing a UE according to one embodiment of the present disclosure;
FIG. 7 is a schematic view showing an information processing device according to one embodiment of the present disclosure;
FIG. 8 is a schematic view showing a network side device according to one embodiment of the present disclosure;
FIG. 9 is another schematic view showing the information processing device according to one embodiment of the present disclosure; and
FIG. 10 is a schematic view showing a core network device according to one embodiment of the present disclosure.

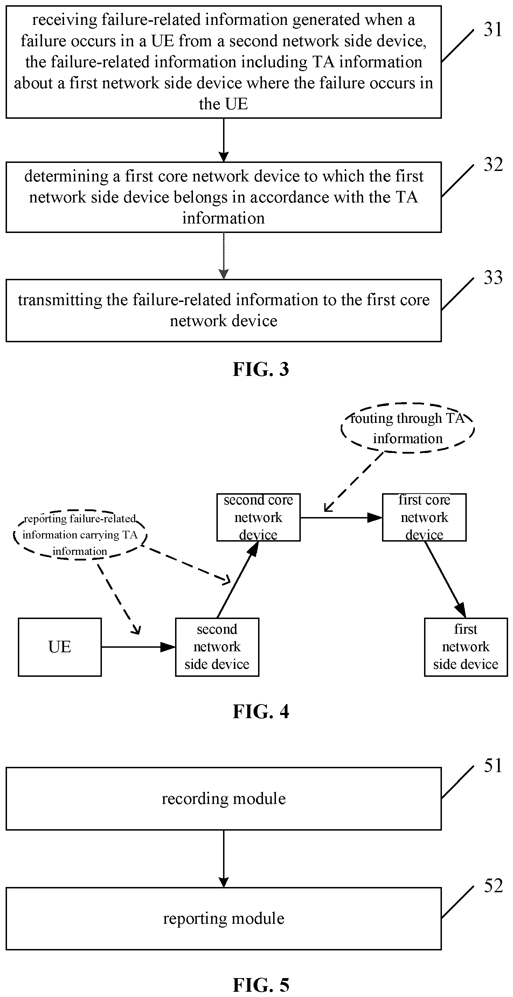

The embodiments related to figures 3, 9 and 10 are not covered by the claimed invention but are useful to understand the invention.

### DETAILED DESCRIPTION

In order to make the objects, the technical solutions and the advantages of the present disclosure more apparent, the present disclosure will be described hereinafter in a clear and complete manner in conjunction with the drawings and embodiments.

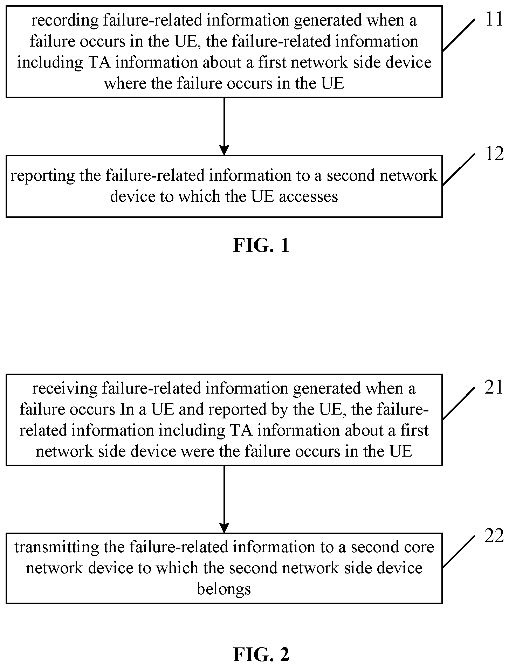

As shown in FIG. 1, the present disclosure provides in some embodiments an information reporting method performed by a UE, which includes the following steps.

Step 11: recording failure-related information generated when a failure occurs in the UE, the failure-related information including TA information about a first network side device where the failure occurs in the UE.

In this step, the TA information is used to indicate routing information about a first core network device to which the first network side device belongs. A second core network device to which the second network side device belongs may determine the first core network device to which the first network side device belongs in accordance with the TA information about the first network side device.

Step 12: reporting the failure-related information to the second network device to which the UE accesses.

In a possible embodiment of the present disclosure, the TA information includes a Tracking Area Code (TAC) or a Tracking Area Identifier (TAI). The TAI includes Public Land Mobile Network (PLMN)+TAC.

In a possible embodiment of the present disclosure, the failure-related information generated when the failure occurs in the UE includes any one of failure-related information generated when an RLF occurs in the UE, or failure-related information generated when an HOF occurs in the UE.

In this case, the failure-related information further includes: cell information which includes identification information about a current cell and a neighboring cell and measurement result information; geographical position information, e.g., Global Navigation Satellite System (GNSS) information; information about a cell where a failure occurs, which includes an identifier of the cell where the failure occurs, e.g., a Cell Global Identifier (CGI); a reestablished cell identifier; a cause for which the RLF is triggered, e.g., that a timer T310 has been expired, a random access problem, or that Radio Link Control (RLC) has reached a maximum quantity of retransmission times; the quantity of transmission times of a preamble; whether a collision occurs in the preamble; whether maximum transmission power has been reached; and/or a BlueTooth/Wireless Local Area Networks (WLAN)-related record.

Alternatively, the failure-related information generated when the failure occurs in the UE includes any one of failure-related information generated when an RLF occurs in the UE, failure-related information generated when an HOF occurs in the UE, failure-related information generated when a CEF occurs in the UE, or failure-related information generated when a connection resume failure occurs in the UE.

In this case, the failure-related information further includes: cell information which includes identification information about a current cell and a neighboring cell and measurement result information; geographical position information, e.g., GNSS information; information about a cell where a failure occurs, which includes an identifier of the cell where the failure occurs, e.g., a CGI; the quantity of transmission times of a preamble; whether a collision occurs in the preamble; whether maximum transmission power has been reached; and/or a BlueTooth/WLAN-related record.

In a possible embodiment of the present disclosure that is not part of the claimed invention, Step 12 includes, in the case that the first network side device and the second network side device are network side devices belonging to a same RAT, transmitting a first uplink message carrying the failure-related information to the second network side device.

In other words, when a cell where the failure occurs in the UE and a cell where the failure-related information is reported by the UE belong to a same RAT, the failure-related information is directly carried in the first uplink message reported by the UE.

In the claimed invention, Step 12 includes, in the case that the first network side device and the second network side device are network side devices belonging to different RATs, transmitting a second uplink message carrying an inter-RAT container corresponding to an RAT to which the first network side device belongs to the second network side device. The failure-related information is provided in the inter-RAT container, and/or the failure-related information is provided at a position in the second uplink message other than the inter-RAT container.

In other words, when a cell where the failure occurs in the UE and a cell where the failure-related information is reported by the UE belong to different RATs, the inter-RAT container is carried in the second uplink message reported by the UE, and the failure-related information is carried in the inter-RAT container, and/or the failure-related information is carried at a position other than the inter-RAT container.

In a word, the failure-related information generated when the failure occurs in the UE carries the TA information about the first network side device where the failure occurs in the UE, so that, in the case that the first network side device and the second network side device belong to different core network devices, the second core network device to which the second network side device belongs determines the first core network device to which the first network side device belongs in accordance with the TA information, and the failure-related information is transmitted to the first network side device through the first core network device. As a result, it is able to solve the problem that it is impossible for the second network side device to transmit the failure-related information to the first network side device when the second network side device fails to know the routing-related information about a node where the failure-related information is recorded by the UE.

As shown in FIG. 2, the present disclosure further provides in some embodiments an information processing method performed by a second network side device, which includes: Step 21 of receiving failure-related information generated when a failure occurs in a UE and reported by the UE, the failure-related information including TA information about a first network side device were the failure occurs in the UE; and Step 22 of transmitting the failure-related information to a second core network device to which the second network side device belongs, the TA information being used to indicate route information about a first core network device to which the first network side device belongs. The second core network device to which the second network side device belongs determines the first core network device to which the first network side device belongs in accordance with the TA information about the first network side device.

In a possible embodiment of the present disclosure, the TA information includes a TAC or a TAI. The TAI specifically includes PLMN+TAC.

In a possible embodiment of the present disclosure, the failure-related information generated when the failure occurs in the UE includes any one of failure-related information generated when an RLF occurs in the UE, or failure-related information generated when an HOF occurs in the UE.

In this case, the failure-related information further includes: cell information which includes identification information about a current cell and a neighboring cell and measurement result information; geographical position information, e.g., GNSS information; information about a cell where a failure occurs, which includes an identifier of the cell where the failure occurs, e.g., a CGI; a reestablished cell identifier; a cause for which the RLF is triggered, e.g., that a timer T310 has been expired, a random access problem, or that RLC has reached a maximum quantity of retransmission times; the quantity of transmission times of a preamble; whether a collision occurs in the preamble; whether maximum transmission power has been reached; and/or a BlueTooth/WLAN-related record.

Alternatively, the failure-related information generated when the failure occurs in the UE includes any one of failure-related information generated when an RLF occurs in the UE, failure-related information generated when an HOF occurs in the UE, failure-related information generated when a CEF occurs in the UE, or failure-related information generated when a connection resume failure occurs in the UE.

In this case, the failure-related information further includes: cell information which includes identification information about a current cell and a neighboring cell and measurement result information; geographical position information, e.g., GNSS information; information about a cell where a failure occurs, which includes an identifier of the cell where the failure occurs, e.g., a CGI; the quantity of transmission times of a preamble; whether a collision occurs in the preamble; whether maximum transmission power has been reached; and/or a BlueTooth/WLAN-related record.

In a possible embodiment of the present disclosure, Step 21 includes receiving a first uplink message carrying the failure-related information from the UE. In other words, when a cell where the failure occurs in the UE and a cell where the failure-related information is reported by the UE belong to a same RAT, the failure-related information is directly carried in the first uplink message reported by the UE.

In another possible embodiment of the present disclosure, Step 21 includes receiving a second uplink message carrying an inter-RAT container corresponding to an RAT to which the first network side device belongs from the UE. The failure-related information is provided in the inter-RAT container, and/or the failure-related information is provided at a position in the second uplink message other than the inter-RAT container. In other words, when a cell where the failure occurs in the UE and a cell where the failure-related information is reported by the UE belong to different RATs, the inter-RAT container is carried in the second uplink message reported by the UE, and the failure-related information is carried in the inter-RAT container, and/or the failure-related information is carried at a position other than the inter-RAT container.

In a word, in the embodiments of the present disclosure, the failure-related information generated when the failure occurs in the UE carries the TA information about the first network side device where the failure occurs in the UE, so that, in the case that the first network side device and the second network side device belong to different core network devices, the second core network device to which the second network side device belongs determines the first core network device to which the first network side device belongs in accordance with the TA information, and the failure-related information is transmitted to the first network side device through the first core network device. As a result, it is able to solve the problem that it is impossible for the second network side device to transmit the failure-related information to the first network side device when the second network side device fails to know the routing-related information about a node where the failure-related information is recorded by the UE.

As shown in FIG. 3, the present disclosure provides in some embodiments an information processing method performed by a second core network device, which includes the following steps.

Step 31: receiving failure-related information generated when a failure occurs in a UE from a second network side device, the failure-related information including TA information about a first network side device where the failure occurs in the UE.

In this step, the TA information is used to indicate routing information about a first core network device to which the first network side device belongs.

Step 32: determining the first core network device to which the first network side device belongs in accordance with the TA information.

In this Step, the second core network device to which the second network side device belongs determines the first core network device to which the first network side device belongs in accordance with the TA information about the first network side device.

Step 33: transmitting the failure-related information to the first core network device. The first core network device transmits the failure-related information to the first network side device, so that the first network side device performs optimization in accordance with the failure-related information.

In a possible embodiment of the present disclosure, the TA information includes a TAC or a TAI. The TAI specifically includes PLMN+TAC.

In a possible embodiment of the present disclosure, the failure-related information generated when the failure occurs in the UE includes any one of failure-related information generated when an RLF occurs in the UE, or failure-related information generated when an HOF occurs in the UE.

In this case, the failure-related information further includes: cell information which includes identification information about a current cell and a neighboring cell and measurement result information; geographical position information, e.g., GNSS information; information about a cell where a failure occurs, which includes an identifier of the cell where the failure occurs, e.g., a CGI; a reestablished cell identifier; a cause for which the RLF is triggered, e.g., that a timer T310 has been expired, a random access problem, or that RLC has reached a maximum quantity of retransmission times; the quantity of transmission times of a preamble; whether a collision occurs in the preamble; whether maximum transmission power has been reached; and/or a BlueTooth/WLAN-related record.

Alternatively, the failure-related information generated when the failure occurs in the UE includes any one of failure-related information generated when an RLF occurs in the UE, failure-related information generated when an HOF occurs in the UE, failure-related information generated when a CEF occurs in the UE, or failure-related information generated when a connection resume failure occurs in the UE.

In this case, the failure-related information further includes: cell information which includes identification information about a current cell and a neighboring cell and measurement result information; geographical position information, e.g., GNSS information; information about a cell where a failure occurs, which includes an identifier of the cell where the failure occurs, e.g., a CGI; the quantity of transmission times of a preamble; whether a collision occurs in the preamble; whether maximum transmission power has been reached; and/or a BlueTooth/WLAN-related record.

In a word, in the embodiments of the present disclosure, the failure-related information generated when the failure occurs in the UE carries the TA information about the first network side device where the failure occurs in the UE, so that, in the case that the first network side device and the second network side device belong to different core network devices, the second core network device to which the second network side device belongs determines the first core network device to which the first network side device belongs in accordance with the TA information, and the failure-related information is transmitted to the first network side device through the first core network device. As a result, it is able to solve the problem that it is impossible for the second network side device to transmit the failure-related information to the first network side device when the second network side device fails to know the routing-related information about a node where the failure-related information is recorded by the UE.

The methods in the embodiments of the present disclosure will be described hereinafter in a clearer manner in conjunction with several examples. In the following examples, the failure-related information generated when the failure occurs in the UE at least includes a CGI of a cell where the failure occurs and the TA information about the cell where the failure occurs.

First Example: the UE records the failure-related information on an NR system, and reports the failure-related information on an LTE system in an inter-RAT manner.

When the UE has recorded the failure-related information on the NR system, moves to the LTE system and transmits an availability indication, a network requires the UE to report the failure-related information, and the UE transmits a UE information response message carrying an inter-RAT container (also called as an NR container) indicating that the failure occurs at an NR cell to an LTE cell. The TA information and the CGI are carried in the inter-RAT container. However, when it is impossible for an LTE base station to parse the inter-RAT container due to a lower version than required, the UE information response message needs to carry the CGI and the TA information in addition to the NR container.

As shown in FIG. 4, after the LTE base station has received the failure-related information about the UE, the base station where the failure-related information is recorded by the UE and the base station where the failure-related information is reported by the UE belong to different RATs, so there is no direct interface between the two base stations, and at this time the failure-related information needs to be forwarded through a core network device. After the base station, upon the receipt of the failure-related information, has reported the failure-related information to the second core network to which the UE accesses, the second core network device needs to determine an RAT to which an original cell (i.e., the first network side device where the failure-related information is recorded by the UE) belongs and the first core network device in accordance with the TA information. For the RAT information, when the TAC has a length of 2 bytes, the original base station belongs to the LTE system, while when the TAC has a length of 3 bytes, the original base station belongs to the NR system. After the first core network device where the original cell is located has received the failure-related information, the failure-related information of the UE is transmitted back to the first core network device to which the original NR base station accesses, and then transmitted to the original NR base station. Then, the NR base station may determine the original cell where the failure occurs in the UE in accordance with the CGI information.

Second Example: the UE records the failure-related information on the LTE system, and reports the failure-related information on an NR system in an inter-RAT manner.

When the UE has recorded the failure-related information on the LTE system, moves to the NR system and transmits an availability indication, the network requires the UE to report the failure-related information, and the UE transmits a UE information response message carrying an inter-RAT container (also called as an LTE container) indicating that the failure occurs at an LTE cell to an NR cell. When the NR base station is compatible with the LTE system, the NR base station may parse the LTE container to obtain the CGI and the TA information. When the NR base station is incompatible with the LTE system, it is impossible for the NR base station to parse the LTE container, or the NR base station may not parse the LTE container to simplify an algorithm. At this time, the UE information response message needs to carry the CGI and the TA information inside or outside the LTE container.

As shown in FIG. 4, upon the receipt of the failure-related information from the UE, the NR base station reports the failure-related information to the second core network device to which the UE accesses. The second core network device determines a routing path in accordance with the TA information, so as to transmit back the failure-related information to the first core network device to which the original LTE base station accesses, and thereby transmit the failure-related information to the original LTE base station. The original LTE base station may further determine an original cell where the failure occurs in the UE in accordance with the CGI information.

Third Example: the UE records and reports the failure-related information in a same RAT.

After the UE has recorded the failure-related information on the LTE system or the NR system and transmits the availability indication to the network in the same system after a long time period, the base station where the failure-related information is recorded by the UE and the base station where the failure-related information is reported by the UE may belong to different core network devices, e.g., different Mobility Management Entities (MMEs) or Authentication Management Functions (AMFs). When the network requires the UE to report the failure-related information, the failure-related information generated when the failure occurs in the system may be carried in the UE information response message.

As shown in FIG. 4, after the base station has received the failure-related information and the original base station where the failure occurs does not access to a same core network device, the failure-related information needs to be forwarded through a core network device. The base station receiving the failure-related information from the UE may transmit the failure-related information to the core network device to which the UE accesses. A core network entity may determine a routing path in accordance with the TA information, so as to transmit back the failure-related information to the core network device to which the original base station accesses and thereby transmit the failure-related information to the original base station. The original base station may further determine the original cell where the failure occurs in the UE in accordance with the CGI information.

Further, the original cell may receive the failure-related information for subsequent parameter optimization. For example, with respect to the HOF, the original cell may determine whether a handover parameter, e.g., a random access channel configuration parameter, is appropriate.

As shown in FIG. 5, the present disclosure provides in some embodiments an information reporting device for a UE, which includes: a recording module 51 configured to record failure-related information generated when a failure occurs in the UE, the failure-related information including TA information about a first network side device where the failure occurs in the UE; and a reporting module 52 configured to report the failure-related information to a second network device to which the UE accesses.

In a possible embodiment of the present disclosure, the failure-related information generated when the failure occurs in the UE includes any one of failure-related information generated when an RLF occurs in the UE, failure-related information generated when an HOF occurs in the UE, failure-related information generated when a CEF occurs in the UE, or failure-related information generated when a connection resume failure occurs in the UE.

In a possible embodiment of the present disclosure, the TA information includes a TAC or a TAI.

In a possible embodiment of the present disclosure, the reporting module includes a first reporting sub-module configured to, in the case that the first network side device and the second network side device are network side devices belonging to a same RAT, transmitting a first uplink message carrying the failure-related information to the second network side device.

In a possible embodiment of the present disclosure, the reporting module includes a second reporting sub-module configured to, in the case that the first network side device and the second network side device are network side devices belonging to different RATs, transmitting a second uplink message carrying an inter-RAT container corresponding to an RAT to which the first network side device belongs to the second network side device. The failure-related information is provided in the inter-RAT container, and/or the failure-related information is provided at a position in the second uplink message other than the inter-RAT container.

The present disclosure further provides in some embodiments an information reporting device. A principle of the information reporting device for solving the problem is similar to that of the above-mentioned information processing method, so the implementation of the information reporting device may refer to that of the information reporting method, which will thus not be particularly defined herein.

In a word, in the embodiments of the present disclosure, the failure-related information generated when the failure occurs in the UE carries therein the TA information about the first network side device where the failure occurs in the UE, so that, in the case that the first network side device and the second network side device belong to different core network devices, the second core network device to which the second network side device belongs determines the first core network device to which the first network side device belongs in accordance with the TA information, and the failure-related information is transmitted to the first network side device through the first core network device. As a result, it is able to solve the problem that it is impossible for the second network side device to transmit back the failure-related information to the first network side device when the second network side device fails to know the routing-related information about a node where the failure-related information is recorded by the UE.

It should be appreciated that, the information reporting device in the embodiments of the present disclosure is capable of implementing the above-mentioned information reporting method, and all the embodiments involving the information reporting method may be applied to the information reporting device with a same or similar beneficial effect.

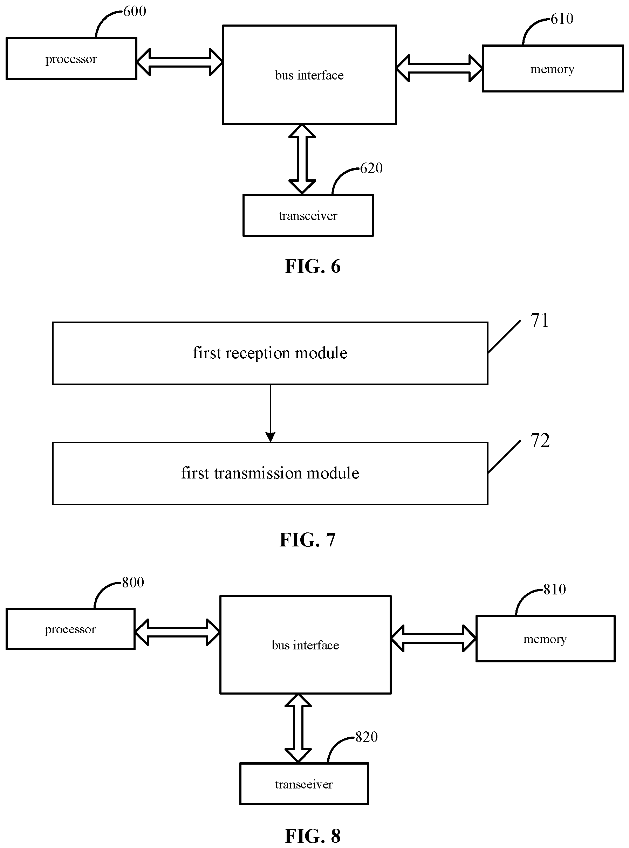

As shown in FIG. 6, the present disclosure further provides in some embodiments a UE, which includes a transceiver 620, a memory 610, a processor 600, and a computer program stored in the memory 610 and executed by the processor 600. The transceiver 620 is configured to receive and transmit data under the control of the processor 600. The processor 600 is configured to read the computer program in the memory, so as to: record failure-related information generated when a failure occurs in the UE, the failure-related information including TA information about a first network side device where the failure occurs in the UE; and report the failure-related information to a second network device to which the UE accesses.

In a possible embodiment of the present disclosure, the failure-related information generated when the failure occurs in the UE includes any one of failure-related information generated when an RLF occurs in the UE, failure-related information generated when an HOF occurs in the UE, failure-related information generated when a CEF occurs in the UE, or failure-related information generated when a connection resume failure occurs in the UE.

In a possible embodiment of the present disclosure, the TA information includes a TAC or a TAI.

In a possible embodiment of the present disclosure, the processor 600 is further configured to read the computer program in the memory, so as to, in the case that the first network side device and the second network side device are network side devices belonging to a same RAT, transmit a first uplink message carrying the failure-related information to the second network side device.

In a possible embodiment of the present disclosure, the processor 600 is further configured to read the computer program in the memory, so as to, in the case that the first network side device and the second network side device are network side devices belonging to different RATs, transmit a second uplink message carrying an inter-RAT container corresponding to an RAT to which the first network side device belongs to the second network side device. The failure-related information is provided in the inter-RAT container, and/or the failure-related information is provided at a position in the second uplink message other than the inter-RAT container.

The present disclosure further provides in some embodiments a UE. A principle of the UE for solving the problem is similar to that of the above-mentioned information reporting method, so the implementation of the UE may refer to that of the information reporting method, which will thus not be particularly defined herein.

In a word, in the embodiments of the present disclosure, the failure-related information generated when the failure occurs in the UE carries therein the TA information about the first network side device where the failure occurs in the UE, so that, in the case that the first network side device and the second network side device belong to different core network devices, the second core network device to which the second network side device belongs determines the first core network device to which the first network side device belongs in accordance with the TA information, and the failure-related information is transmitted to the first network side device through the first core network device. As a result, it is able to solve the problem that it is impossible for the second network side device to transmit back the failure-related information to the first network side device when the second network side device fails to know the routing-related information about a node where the failure-related information is recorded by the UE.

It should be appreciated that, the UE in the embodiments of the present disclosure is capable of implementing the above-mentioned information reporting method, so all the embodiments involving the information reporting method may be applied to the UE with a same or similar beneficial effect.

The present disclosure further provides in some embodiments a computer-readable storage medium storing therein a computer program. The computer program is executed by a processor, so as to implement the above-mentioned information reporting method with a same technical effect, which will not be particularly defined herein. The computer-readable storage medium may be, e.g., a Read-Only Memory (ROM), a Random Access Memory (RAM), a magnetic disk or an optical disk.

As shown in FIG. 7, the present disclosure further provides in some embodiments an information processing device for a second network side device, which includes: a first reception module 71 configured to receive failure-related information generated when a failure occurs in a UE and reported by the UE, the failure-related information including TA information about a first network side device were the failure occurs in the UE; and a first transmission module 72 configured to transmit the failure-related information to a second core network device to which the second network side device belongs, the TA information being used to indicate route information about a first core network device to which the first network side device belongs.

In a possible embodiment of the present disclosure, the failure-related information generated when the failure occurs in the UE includes any one of failure-related information generated when an RLF occurs in the UE, failure-related information generated when an HOF occurs in the UE, failure-related information generated when a CEF occurs in the UE, or failure-related information generated when a connection resume failure occurs in the UE.

In a possible embodiment of the present disclosure, the TA information includes a TAC or a TAI.

In a possible embodiment of the present disclosure, the first reception module includes a first reception sub-module configured to receive a first uplink message carrying the failure-related information from the UE.

In a possible embodiment of the present disclosure, the first reception module includes a second reception sub-module configured to receive a second uplink message carrying an inter-RAT container corresponding to an RAT to which the first network side device belongs from the UE. The failure-related information is provided in the inter-RAT container, and/or the failure-related information is provided at a position in the second uplink message other than the inter-RAT container.

The present disclosure further provides in some embodiments an information processing device. A principle of the information processing device for solving the problem is similar to that of the above-mentioned information processing method, so the implementation of the information processing device may refer to that of the information processing method, which will not be particularly defined herein.

In a word, in the embodiments of the present disclosure, the failure-related information generated when the failure occurs in the UE carries therein the TA information about the first network side device where the failure occurs in the UE, so that, in the case that the first network side device and the second network side device belong to different core network devices, the second core network device to which the second network side device belongs determines the first core network device to which the first network side device belongs in accordance with the TA information, and the failure-related information is transmitted to the first network side device through the first core network device. As a result, it is able to solve the problem that it is impossible for the second network side device to transmit back the failure-related information to the first network side device when the second network side device fails to know the routing-related information about a node where the failure-related information is recorded by the UE.

It should be appreciated that, the information processing device in the embodiments of the present disclosure is capable of implementing the above-mentioned information processing method, so all the embodiments involving the information processing method may be applied to the information processing device with a same or similar beneficial effect.

As shown in FIG. 8, the present disclosure further provides in some embodiments a network side device, which is a second network side device and includes a transceiver 820, a memory 810, a processor 800, and a computer program stored in the memory 810 and executed by the processor 800. The transceiver 820 is configured to receive and transmit data under the control of the processor 800. The processor 800 is configured to read the computer program in the memory, so as to: receive failure-related information generated when a failure occurs in a UE and reported by the UE, the failure-related information including TA information about a first network side device were the failure occurs in the UE; and transmit the failure-related information to a second core network device to which the second network side device belongs, the TA information being used to indicate route information about a first core network device to which the first network side device belongs.

In a possible embodiment of the present disclosure, the failure-related information generated when the failure occurs in the UE includes any one of failure-related information generated when an RLF occurs in the UE, failure-related information generated when an HOF occurs in the UE, failure-related information generated when a CEF occurs in the UE, or failure-related information generated when a connection resume failure occurs in the UE.

In a possible embodiment of the present disclosure, the TA information includes a TAC or a TAI.

In a possible embodiment of the present disclosure, the processor 800 is further configured to read the computer program in the memory, so as to receive a first uplink message carrying the failure-related information from the UE.

In a possible embodiment of the present disclosure, the processor 800 is further configured to read the computer program in the memory, so as to receive a second uplink message carrying an inter-RAT container corresponding to an RAT to which the first network side device belongs from the UE. The failure-related information is provided in the inter-RAT container, and/or the failure-related information is provided at a position in the second uplink message other than the inter-RAT container.

The present disclosure further provides in some embodiments a network side device. A principle of the network side device for solving the problem is similar to that of the above-mentioned information processing method, so the implementation of the network side device may refer to that of the information processing method, which will thus not be particularly defined herein.

In a word, in the embodiments of the present disclosure, the failure-related information generated when the failure occurs in the UE carries therein the TA information about the first network side device where the failure occurs in the UE, so that, in the case that the first network side device and the second network side device belong to different core network devices, the second core network device to which the second network side device belongs determines the first core network device to which the first network side device belongs in accordance with the TA information, and the failure-related information is transmitted to the first network side device through the first core network device. As a result, it is able to solve the problem that it is impossible for the second network side device to transmit back the failure-related information to the first network side device when the second network side device fails to know the routing-related information about a node where the failure-related information is recorded by the UE.

It should be appreciated that, the information processing device in the embodiments of the present disclosure is capable of implementing the above-mentioned information processing method, so all the embodiments involving the information processing method may be applied to the information processing device with a same or similar beneficial effect.

The present disclosure further provides in some embodiments a computer-readable storage medium storing therein a computer program. The computer program is executed by a processor, so as to implement the above-mentioned information processing method with a same technical effect, which will not be particularly defined herein. The computer-readable storage medium may be, e.g., an ROM, an RAM, a magnetic disk or an optical disk.

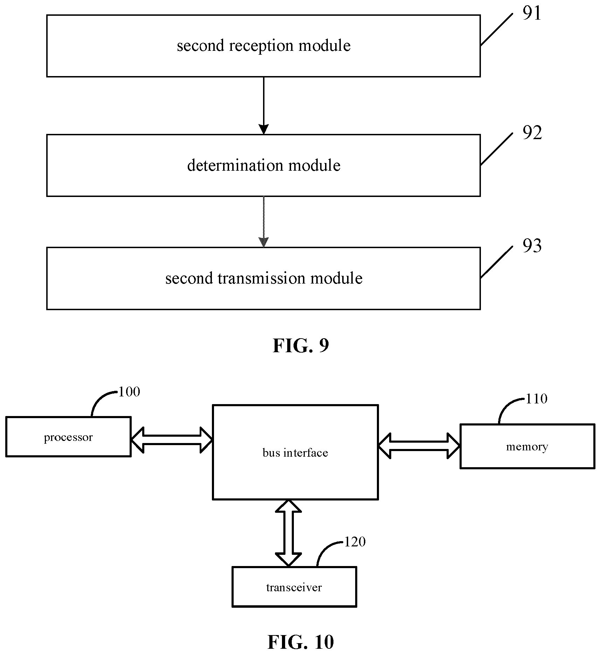

As shown in FIG. 9, the present disclosure further provides in some embodiments an information processing device for a second core network device, which includes: a second reception module 91 configured to receive failure-related information generated when a failure occurs in a UE from a second network side device, the failure-related information including TA information about a first network side device where the failure occurs in the UE; a determination module 92 configured to determine a first core network device to which the first network side device belongs in accordance with the TA information; and a second transmission module 93 configured to transmit the failure-related information to the first core network device.

In a possible embodiment of the present disclosure, the failure-related information generated when the failure occurs in the UE includes any one of failure-related information generated when an RLF occurs in the UE, failure-related information generated when an HOF occurs in the UE, failure-related information generated when a CEF occurs in the UE, or failure-related information generated when a connection resume failure occurs in the UE.

In a possible embodiment of the present disclosure, the TA information includes a TAC or a TAI.

The present disclosure further provides in some embodiments an information processing device. A principle of the information processing device for solving the problem is similar to that of the above-mentioned information processing method, so the implementation of the information processing device may refer to that of the information processing method, which will thus not be particularly defined herein.

In a word, in the embodiments of the present disclosure, the failure-related information generated when the failure occurs in the UE carries therein the TA information about the first network side device where the failure occurs in the UE, so that, in the case that the first network side device and the second network side device belong to different core network devices, the second core network device to which the second network side device belongs determines the first core network device to which the first network side device belongs in accordance with the TA information, and the failure-related information is transmitted to the first network side device through the first core network device. As a result, it is able to solve the problem that it is impossible for the second network side device to transmit back the failure-related information to the first network side device when the second network side device fails to know the routing-related information about a node where the failure-related information is recorded by the UE.

It should be appreciated that, the information processing device in the embodiments of the present disclosure is capable of implementing the above-mentioned information processing method, so all the embodiments involving the information processing method may be applied to the information processing device with a same or similar beneficial effect.

As shown in FIG. 10, the present disclosure further provides in some embodiments a core network device, which is a second core network device and includes a transceiver 120, a memory 110, a processor 100, and a computer program stored in the memory 110 and executed by the processor 100. The transceiver 120 is configured to receive and transmit data under the control of the processor 100. The processor 100 is configured to read the computer program in the memory, so as to: receive failure-related information generated when a failure occurs in a UE from a second network side device, the failure-related information including TA information about a first network side device where the failure occurs in the UE; determine a first core network device to which the first network side device belongs in accordance with the TA information; and transmit the failure-related information to the first core network device.

In a possible embodiment of the present disclosure, the failure-related information generated when the failure occurs in the UE includes any one of failure-related information generated when an RLF occurs in the UE, failure-related information generated when an HOF occurs in the UE, failure-related information generated when a CEF occurs in the UE, or failure-related information generated when a connection resume failure occurs in the UE.

In a possible embodiment of the present disclosure, the TA information includes a TAC or a TAI.

The present disclosure further provides in some embodiments a core network device. A principle of the core network device for solving the problem is similar to that of the above-mentioned information processing method, so the implementation of the core network device may refer to that of the information processing method, which will thus not be particularly defined herein.

In a word, in the embodiments of the present disclosure, the failure-related information generated when the failure occurs in the UE carries therein the TA information about the first network side device where the failure occurs in the UE, so that, in the case that the first network side device and the second network side device belong to different core network devices, the second core network device to which the second network side device belongs determines the first core network device to which the first network side device belongs in accordance with the TA information, and the failure-related information is transmitted to the first network side device through the first core network device. As a result, it is able to solve the problem that it is impossible for the second network side device to transmit back the failure-related information to the first network side device when the second network side device fails to know the routing-related information about a node where the failure-related information is recorded by the UE.

It should be appreciated that, the information processing device in the embodiments of the present disclosure is capable of implementing the above-mentioned information processing method, so all the embodiments involving the information processing method may be applied to the information processing device with a same or similar beneficial effect.

The present disclosure further provides in some embodiments a computer-readable storage medium storing therein a computer program. The computer program is executed by a processor, so as to implement the above-mentioned information processing method with a same technical effect, which will not be particularly defined herein. The computer-readable storage medium may be, e.g., an ROM, an RAM, a magnetic disk or an optical disk.

It should be appreciated that, the embodiments of the present disclosure are implemented by hardware, software, firmware, middleware, microcode or a combination thereof. For the hardware implementation, the processor includes one or more of an Application Specific Integrated Circuits (ASIC), a Digital Signal Processor (DSP), a DSP device (DSPD), a Programmable Logic Device (PLD), a Field-Programmable Gate Array (FPGA), a general-purpose processor, a controller, a microcontroller, a microprocessor, any other electronic unit capable of achieving the functions in the present disclosure, or a combination thereof.

It should be appreciated that, such words as "include" or "including" or any other variations involved in the present disclosure intend to provide non-exclusive coverage, so that a procedure, method, article or device including a series of elements may also include any other elements not listed herein, or may include any inherent elements of the procedure, method, article or device. If without any further limitations, for the elements defined by such sentence as "including one ...", it is not excluded that the procedure, method, article or device including the elements may also include any other identical elements.

Through the above-mentioned description, it may be apparent for a person skilled in the art that the present disclosure may be implemented by software as well as a necessary common hardware platform, or by hardware, and the former may be better in most cases. Based on this, the technical solutions of the present disclosure, partial or full, or parts of the technical solutions of the present disclosure contributing to the related art, may appear in the form of software products, which may be stored in a storage medium (e.g., ROM/RAM, magnetic disk or optical disk) and include several instructions so as to enable a terminal device (mobile phone, computer, server, air conditioner or network device) to execute the method in the embodiments of the present disclosure.

The description has been given hereinabove in conjunction with the drawings and the embodiments, but the present disclosure shall not be limited to the above preferred embodiments. These embodiments are for illustrative purposes only, but shall not be used to limit the scope of the present disclosure. A person skilled in the art may make various alternations or modifications without departing from the scope of the invention as defined by the appended claims.

## Claims

1. An information reporting method performed by a User Equipment, UE, the information reporting method comprising:
recording (11) failure-related information generated when a failure occurs in the UE, the failure-related information comprising Tracking Area, TA, information about a first network side device where the failure occurs in the UE, the TA information being used to indicate route information about a first core network device to which the first network side device belongs; and
reporting (12) the failure-related information to a second network device to which the UE accesses;
wherein the reporting the failure-related information to the second network side device to which the UE accesses comprises:
in the case that the first network side device and the second network side device are network side devices belonging to different RATs, transmitting an uplink message carrying therein an inter-RAT container corresponding to an RAT to which the first network side device belongs to the second network side device,
wherein the failure-related information is provided in the inter-RAT container, and/or the failure-related information is provided at a position in the uplink message other than the inter-RAT container.

2. The information reporting method according to claim 1, wherein the failure-related information generated when the failure occurs in the UE comprises any one of:
failure-related information generated when a Radio Link Failure, RLF, occurs in the UE,
failure-related information generated when a Handover Failure, HOF, occurs in the UE,
failure-related information generated when a Connection Establishment Failure, CEF, occurs in the UE, or
failure-related information generated when a connection resume failure occurs in the UE.

3. The information reporting method according to claim 1, wherein the TA information comprises a Tracking Area Code, TAC, or a Tracking Area Identifier, TAI.

4. An information processing method performed by a second network side device, the information processing method comprising:
receiving (21) failure-related information generated when a failure occurs in a User Equipment, UE, and reported by the UE, the failure-related information comprising Tracking Area, TA, information about a first network side device were the failure occurs in the UE; and
transmitting (22) the failure-related information to a second core network device to which the second network side device belongs, the TA information being used to indicate route information about a first core network device to which the first network side device belong, in the case that the first network side device and the second network side device are network side devices belonging to different core network devices;
wherein the receiving the failure-related information generated when the failure occurs in the UE and reported by the UE comprises:
receiving an uplink message carrying therein an inter-RAT container corresponding to an RAT to which the first network side device belongs from the UE, in the case that the first network side device and the second network side device are network side devices belonging to different RATs,
wherein the failure-related information is provided in the inter-RAT container, and/or the failure-related information is provided at a position in the uplink message other than the inter-RAT container.

5. The information processing method according to claim 4, wherein the failure-related information generated when the failure occurs in the UE comprises any one of:
failure-related information generated when a Radio Link Failure, RLF, occurs in the UE,
failure-related information generated when a Handover Failure, HOF, occurs in the UE,
failure-related information generated when a Connection Establishment Failure, CEF, occurs in the UE, or
failure-related information generated when a connection resume failure occurs in the UE.

6. The information processing method according to claim 4, wherein the TA information comprises a Tracking Area Code, TAC, or a Tracking Area Identifier, TAI.

7. An information reporting device for a User Equipment, UE, the information reporting device comprising:
a recording module (51) configured to record failure-related information generated when a failure occurs in the UE, the failure-related information comprising Tracking Area, TA,
information about a first network side device where the failure occurs in the UE, the TA information is for indicating route information about a first core network device to which the first network side device belongs; and
a reporting module (52) configured to report the failure-related information to a second network device to which the UE accesses;
wherein the reporting module (52) is further configured to,
in the case that the first network side device and the second network side device are network side devices belonging to different RATs, transmit an uplink message carrying therein an inter-RAT container corresponding to an RAT to which the first network side device belongs to the second network side device,
wherein the information reporting device is arranged to provide the failure-related information in the inter-RAT container, and/or the failure-related information at a position in the uplink message other than the inter-RAT container.

8. The information reporting device according to claim 7, wherein the failure-related information generated when the failure occurs in the UE comprises any one of:
failure-related information generated when a Radio Link Failure, RLF, occurs in the UE,
failure-related information generated when a Handover Failure, HOF, occurs in the UE,
failure-related information generated when a Connection Establishment Failure, CEF, occurs in the UE, or
failure-related information generated when a connection resume failure occurs in the UE.

9. The information reporting device according to claim 7, wherein the TA information comprises a Tracking Area Code, TAC, or a Tracking Area Identifier, TAI.

10. An information processing device for a second network side device, the information processing device comprising:
a first reception module (71) configured to receive failure-related information generated when a failure occurs in a User Equipment, UE, and reported by the UE, the failure-related information comprising Tracking Area, TA, information about a first network side device were the failure occurs in the UE; and
a first transmission module (72) configured to transmit the failure-related information to a second core network device to which the second network side device belongs, the TA information being used to indicate route information about a first core network device to which the first network side device belongs, in the case that the first network side device and the second network side device are network side devices belonging to different core network devices;
wherein the first reception module (71) is further configured to,
receive an uplink message carrying therein an inter-RAT container corresponding to an RAT to which the first network side device belongs from the UE, in the case that the first network side device and the second network side device are network side devices belonging to different RATs,
wherein the information processing device is configured to receive the failure-related information provided in the inter-RAT container, and/or the failure-related information provided at a position in the uplink message other than the inter-RAT container.

11. The information processing device according to claim 10, wherein the failure-related information generated when the failure occurs in the UE comprises any one of:
failure-related information generated when a Radio Link Failure, RLF, occurs in the UE,
failure-related information generated when a Handover Failure, HOF, occurs in the UE,
failure-related information generated when a Connection Establishment Failure, CEF, occurs in the UE, or
failure-related information generated when a connection resume failure occurs in the UE.

12. The information processing device according to claim 10, wherein the TA information comprises a Tracking Area Code, TAC, or a Tracking Area Identifier, TAI.

## Patentansprüche

1. Verfahren zum Berichten von Informationen, das von einem Benutzergerät, UE, durchgeführt wird, wobei das Verfahren zum Berichten von Informationen umfasst:
Aufzeichnen (11) von fehlerbezogenen Informationen, die erzeugt werden, wenn ein Fehler in dem UE auftritt, wobei die fehlerbezogenen Informationen Tracking-Area-, TA-, Informationen über ein erstes netzseitiges Gerät umfassen, in dem der Fehler in dem UE auftritt, wobei die TA-Informationen verwendet werden, um Routinginformationen über ein erstes Kernnetzgerät anzuzeigen, zu dem das erste netzseitige Gerät gehört; und
Berichten (12) der fehlerbezogenen Informationen an ein zweites netzseitiges Gerät, auf das das UE zugreift;
wobei das Berichten der fehlerbezogenen Informationen an das zweite netzseitige Gerät, auf das das UE zugreift, umfasst:
in dem Fall, dass das erste netzseitige Gerät und das zweite netzseitige Gerät netzseitige Geräte sind, die zu unterschiedlichen RATs gehören, Übertragen einer Uplink-Nachricht, die einen Inter-RAT-Container enthält, der einem RAT entspricht, zu dem das erste netzseitige Gerät gehört, zu dem zweiten netzseitigen Gerät,
wobei die fehlerbezogenen Informationen in dem Inter-RAT-Container bereitgestellt werden und/oder die fehlerbezogenen Informationen an einer anderen Position in der Uplink-Nachricht, als dem Inter-RAT-Container bereitgestellt werden.

2. Verfahren zum Berichten von Informationen nach Anspruch 1, wobei die fehlerbezogenen Informationen, die erzeugt werden, wenn der Fehler im UE auftritt, eine der folgenden Informationen umfassen:
fehlerbezogene Informationen, die erzeugt werden, wenn ein Fehler der Funkverbindung (Radio Link Failure), RLF, im UE auftritt,
fehlerbezogene Informationen, die erzeugt werden, wenn im UE ein Handover-Fehler (HOF) auftritt,
fehlerbezogene Informationen, die erzeugt werden, wenn ein Fehler beim Verbindungsaufbau (Connection Establishment Failure), CEF, im UE auftritt, oder
fehlerbezogene Informationen, die erzeugt werden, wenn ein Fehler bei der Wiederaufnahme der Verbindung im UE auftritt.

3. Verfahren zum Berichten von Informationen nach Anspruch 1, wobei die TA-Informationen einen Tracking Area Code, TAC, oder einen Tracking Area Identifier, TAI, umfassen.

4. Verfahren zum Verarbeiten von Informationen, das von einem zweiten netzseitigen Gerät durchgeführt wird, wobei das Verfahren zum Verarbeiten von Informationen umfasst:
Empfangen (21) von fehlerbezogenen Informationen, die erzeugt werden, wenn ein Fehler in einem Benutzergerät, UE, auftritt und von dem UE berichtet werden, wobei die fehlerbezogenen Informationen Tracking Area, TA, Informationen über ein erstes netzseitiges Gerät aufweisen, in dem der Fehler in dem UE auftritt; und
Übertragen (22) der fehlerbezogenen Informationen an ein zweites Kernnetzgerät, zu dem das zweite netzseitige Gerät gehört, wobei die TA-Informationen verwendet werden, um Routinginformationen über ein erstes Kernnetzgerät anzuzeigen, zu dem das erste netzseitige Gerät gehört, in dem Fall, dass das erste netzseitige Gerät und das zweite netzseitige Gerät netzseitige Geräte sind, die zu verschiedenen Kernnetzgeräten gehören;
wobei das Empfangen der fehlerbezogenen Informationen, die erzeugt werden, wenn der Fehler in dem UE auftritt, und die von dem UE berichtet werden, umfasst:
Empfangen einer Uplink-Nachricht, die einen Inter-RAT-Container enthält, der einem RAT entspricht, zu dem das erste netzseitige Gerät vom UE gehört, falls das erste netzseitige Gerät und das zweite netzseitige Gerät netzseitige Geräte sind, die zu verschiedenen RATs gehören,
wobei die fehlerbezogenen Informationen in dem Inter-RAT-Container bereitgestellt werden und/oder die fehlerbezogenen Informationen an einer anderen Position in der Uplink-Nachricht als dem Inter-RAT-Container bereitgestellt werden.

5. Verfahren zum Verarbeiten von Informationen nach Anspruch 4, wobei die fehlerbezogenen Informationen, die erzeugt werden, wenn der Fehler im UE auftritt, eine der folgenden Informationen umfassen:
fehlerbezogene Informationen, die erzeugt werden, wenn ein Fehler der Funkverbindung (Radio Link Failure), RLF, im UE auftritt,
fehlerbezogene Informationen, die beim Auftreten eines Handover-Fehlers (HOF) im UE erzeugt werden,
fehlerbezogene Informationen, die erzeugt werden, wenn ein Fehler beim Verbindungsaufbau (Connection Establishment Failure), CEF, im UE auftritt, oder
fehlerbezogene Informationen, die erzeugt werden, wenn ein Fehler bei der Wiederaufnahme der Verbindung im UE auftritt.

6. Verfahren zum Verarbeiten von Informationen nach Anspruch 4, wobei die TA-Informationen einen Tracking Area Code, TAC, oder einen Tracking Area Identifier, TAI, umfassen.

7. Vorrichtung zum Berichten von Informationen für ein Benutzergerät, UE, wobei die Vorrichtung zum Berichten von Informationen aufweist:
ein Aufzeichnungsmodul (51), das konfiguriert ist, fehlerbezogene Informationen aufzuzeichnen, die erzeugt werden, wenn ein Fehler in dem UE auftritt, wobei die fehlerbezogenen Informationen Tracking-Area-, TA-, Informationen über ein erstes netzseitiges Gerät aufweisen, in dem der Fehler in dem UE auftritt, wobei die TA-Informationen dazu dienen, Routinginformationen über ein erstes Kernnetzgerät anzuzeigen, zu dem das erste netzseitige Gerät gehört; und
ein Berichtsmodul (52), das konfiguriert ist, die fehlerbezogenen Informationen an ein zweites netzseitiges Gerät zu berichten, auf das das UE zugreift;
wobei das Berichtsmodul (52) ferner so konfiguriert ist, dass es,
in dem Fall, dass das erste netzseitige Gerät und das zweite netzseitige Gerät netzseitige Geräte sind, die zu verschiedenen RATs gehören, eine Uplink-Nachricht übertragen, die einen Inter-RAT-Container enthält, der einem RAT entspricht, zu dem das erste netzseitige Gerät und das zweite netzseitige Gerät gehören,
wobei die Vorrichtung zum Berichten von Informationen konfiguriert ist, die fehlerbezogenen Informationen in dem Inter-RAT-Container und/oder die fehlerbezogenen Informationen an einer anderen Position in der Uplink-Nachricht als dem Inter-RAT-Container bereitzustellen.

8. Vorrichtung zum Berichten von Informationen nach Anspruch 7, wobei die fehlerbezogenen Informationen, die erzeugt werden, wenn der Fehler im UE auftritt, eine der folgenden Informationen umfassen:
fehlerbezogene Informationen, die erzeugt werden, wenn ein Fehler der Funkverbindung (Radio Link Failure), RLF, im UE auftritt,
fehlerbezogene Informationen, die erzeugt werden, wenn im UE ein Handover-Fehler (HOF) auftritt,
fehlerbezogene Informationen, die erzeugt werden, wenn ein Fehler beim Verbindungsaufbau (Connection Establishment Failure), CEF, im UE auftritt, oder
fehlerbezogene Informationen, die erzeugt werden, wenn ein Fehler bei der Wiederaufnahme der Verbindung im UE auftritt.

9. Vorrichtung zum Berichten von Informationen nach Anspruch 7, wobei die TA-Informationen einen Tracking Area Code, TAC, oder einen Tracking Area Identifier, TAI, umfassen.

10. Vorrichtung zum Verarbeiten von Informationen für eine zweite netzseitige Vorrichtung, wobei die Vorrichtung zum Verarbeiten von Informationen aufweist:
ein erstes Empfangsmodul (71), das konfiguriert ist, fehlerbezogene Informationen zu empfangen, die erzeugt werden, wenn ein Fehler in einem Benutzergerät, UE, auftritt und von dem UE berichtet werden, wobei die fehlerbezogenen Informationen Tracking Area-, TA-, Informationen über ein erstes netzseitiges Gerät aufweisen, in dem der Fehler in dem UE auftritt; und
ein erstes Übertragungsmodul (72), das konfiguriert ist, die fehlerbezogenen Informationen an ein zweites Kernnetzgerät zu übertragen, zu dem das zweite netzseitige Gerät gehört, wobei die TA-Informationen verwendet werden, um Routinginformationen über ein erstes Kernnetzgerät anzuzeigen, zu dem das erste netzseitige Gerät gehört, falls das erste netzseitige Gerät und das zweite netzseitige Gerät netzseitige Geräte sind, die zu verschiedenen Kernnetzgeräten gehören;
wobei das erste Empfangsmodul (71) ferner konfiguriert ist,
eine Uplink-Nachricht vom UE zu empfangen, die einen Inter-RAT-Container enthält, der einem RAT entspricht, zu dem das erste netzseitige Gerät gehört, falls das erste netzseitige Gerät und das zweite netzseitige Gerät Geräte sind, die zu verschiedenen RATS gehören,
wobei die Vorrichtung zum Verarbeiten von Informationen konfiguriert ist, die im Inter-RAT-Container bereitgestellten fehlerbezogenen Informationen und/oder die an einer anderen Position in der Uplink-Nachricht als dem Inter-RAT-Container bereitgestellten fehlerbezogenen Informationen zu empfangen.

11. Vorrichtung zum Verarbeiten von Informationen nach Anspruch 10, wobei die fehlerbezogenen Informationen, die erzeugt werden, wenn der Fehler in dem UE auftritt, eine der folgenden Informationen umfassen:
fehlerbezogene Informationen, die erzeugt werden, wenn ein Fehler der Funkverbindung (Radio Link Failure), RLF, im UE auftritt,
fehlerbezogene Informationen, die beim Auftreten eines Handover-Fehlers (HOF) im UE erzeugt werden,
fehlerbezogene Informationen, die erzeugt werden, wenn ein Fehler beim Verbindungsaufbau (Connection Establishment Failure), CEF, im UE auftritt, oder
fehlerbezogene Informationen, die erzeugt werden, wenn ein Fehler bei der Wiederaufnahme der Verbindung im UE auftritt.

12. Vorrichtung zum Verarbeiten von Informationen nach Anspruch 10, wobei die TA-Informationen einen Tracking Area Code, TAC, oder einen Tracking Area Identifier, TAI, umfassen.

## Revendications

1. Procédé de notification d'informations, mis en œuvre par un équipement d'utilisateur (UE), le procédé de notification d'informations comprenant de :
enregistrer (11) des informations associées à un échec générée lorsqu'un échec a lieu dans l'UE, les informations associées à un échec comprenant des informations de zone de suivi (TA) concernant un premier dispositif côté réseau où l'échec a lieu dans l'UE, les informations de TA étant utilisées pour indiquer des informations de routage concernant un premier dispositif de réseau d'infrastructure auquel le premier dispositif côté réseau appartient ; et
notifier (12) des informations associées à un échec à un second dispositif côté réseau auquel l'UE accède ;
dans lequel la notification des informations associées à un échec au second dispositif côté réseau auquel l'UE accède comprend de :
dans le cas où le premier dispositif côté réseau et le second dispositif côté réseau sont des dispositifs côté réseau appartenant à différentes RAT, transmettre un message de liaison montante transportant dans celui-ci un conteneur inter-RAT correspondant à une RAT à laquelle le premier dispositif côté réseau appartient, au second dispositif côté réseau,
dans lequel les informations associées à un échec sont fournies dans le conteneur inter-RAT et/ou les informations associées à un échec sont fournies à une position dans le message de liaison montante autre que le conteneur inter-RAT.

2. Procédé de notification d'informations selon la revendication 1, dans lequel les informations associées à un échec générées lorsque l'échec a lieu dans l'UE comprennent un quelconque parmi :
des informations associées à un échec générées lorsqu'un échec de liaison radio (RLF) a lieu dans l'UE,
des informations associées à un échec générées lorsqu'un échec de transfert (HOF) a lieu dans l'UE,
des informations associées à un échec générées lorsqu'un échec d'établissement de connexion (CEF) a lieu dans l'UE, ou
des informations associées à un échec générées lorsqu'un échec de reprise de connexion a lieu dans l'UE.

3. Procédé de notification d'informations selon la revendication 1, dans lequel les informations de TA comprennent un code de zone de suivi (TAC) ou un identifiant de zone de suivi (TAI).

4. Procédé de traitement d'informations mis en œuvre par un second dispositif côté réseau, le procédé de traitement d'informations comprenant de :
recevoir (21) des informations associées à un échec générées lorsque un échec a lieu dans un équipement d'utilisateur (UE) et notifiées par l'UE, les informations associées à un échec comprenant des informations de zone de suivi (TA) concernant un premier dispositif côté réseau où l'échec a lieu dans l'UE ; et
transmettre (22) les informations associées à un échec à un second dispositif de réseau d'infrastructure auquel le second dispositif côté réseau appartient, les informations de TA étant utilisées pour indiquer des informations de routage concernant un premier dispositif de réseau d'infrastructure auquel le premier dispositif côté réseau appartient, dans le cas où le premier dispositif côté réseau et le second dispositif côté réseau sont des dispositifs côté réseau appartenant à différents dispositifs de réseau d'infrastructure ;
dans lequel la réception des informations associées à un échec générées lorsque l'échec a lieu dans l'UE et notifiées par l'UE comprend de :
recevoir un message de liaison montante transportant dans celui-ci un conteneur inter-RAT correspondant à une RAT à laquelle le premier dispositif côté réseau appartient à partir de l'UE, dans le cas où le premier dispositif côté réseau et le second dispositif côté réseau sont des dispositif côté réseau appartenant à différentes RAT,
dans lequel les informations associées à un échec sont fournies dans le conteneur inter-RAT et/ou les informations associées à un échec sont fournies à une position dans le message de liaison montante autre que le conteneur inter-RAT.

5. Procédé de traitement d'informations selon la revendication **4,** dans lequel les informations associées à un échec générées lorsque l'échec a lieu dans l'UE, comprennent un quelconque parmi :
des informations associées à un échec générées lorsqu'un échec de liaison radio (REF) a lieu dans l'UE,
des informations associées à un échec générées lorsqu'un échec de transfert (HOF) a lieu dans l'UE,
des informations associées à un échec générées lorsqu'un échec d'établissement de connexion (CEF) a lieu dans l'UE, ou
des informations associées à un échec générées lorsqu'un échec de reprise de connexion a lieu dans l'UE.

6. Procédé de traitement d'informations selon la revendication 4, dans lequel les informations de TA comprennent un code de zone de suivi (TAC) ou un identifiant de zone de suivi (TAI).

7. Dispositif de notification d'informations pour un équipement d'utilisateur (UE), le dispositif de notification d'informations comprenant :
un module d'enregistrement (51) configuré pour enregistrer des informations associées à un échec générées lorsqu'un échec a lieu dans l'UE, les informations associées à un échec comprenant des informations de zone de suivi (TA) concernant un premier dispositif côté réseau où l'échec a lieu dans l'UE, les informations de TA étant destinées à indiquer des informations de routage concernant un premier dispositif de réseau d'infrastructure auquel premier dispositif côté réseau appartient ; et
un module de notification (52) configuré pour notifier les informations associées à un échec, à un second dispositif côté réseau auquel l'UE accède ;
dans lequel le module de notification (52) est en outre configuré pour, dans le cas où le premier dispositif côté réseau et le second dispositif côté réseau sont des dispositifs côté réseau appartenant à différentes RAT, transmettre un message de liaison montante transportant dans celui-ci un conteneur inter-RAT correspondant à une RAT à laquelle le premier dispositif côté réseau appartient, au second dispositif côté réseau,
dans lequel le dispositif de notification d'informations est conçu pour fournir les informations associées à un échec dans le conteneur inter-RAT et/ou les informations associées à un échec à une position dans le message de liaison montante autre que le conteneur inter-RAT.

8. Dispositif de notification d'informations selon la revendication 7, dans lequel les informations associées à un échec générées lorsque l'échec a lieu dans l'UE comprennent un quelconque parmi :
des informations associées à un échec générées lorsqu'un échec de liaison radio (RLF) a lieu dans l'UE,
des informations associées à un échec générées lorsqu'un échec de transfert (HOF) a lieu dans l'UE,
des informations associées à un échec générées lorsqu'un échec d'établissement de connexion (CEF) a lieu dans l'UE, ou
des informations associées à un échec générées lorsqu'un échec de reprise de connexion a lieu dans l'UE.

9. Dispositif de notification d'informations selon la revendication 7, dans lequel les informations de TA comprennent un code de zone de suivi, TAC, ou un identifiant de zone de suivi, TAI.

10. Dispositif de traitement d'informations pour un second dispositif côté réseau, le dispositif de traitement d'informations comprenant :
un premier module de réception (71) configuré pour recevoir des informations associées à un échec générées lorsqu'un échec a lieu dans un équipement d'utilisateur (UE) et notifiées par l'UE, les informations associées à un échec comprenant des informations de zone de suivi concernant un premier dispositif côté réseau où l'échec a lieu dans l'UE ; et
un premier module de transmission (72) configuré pour transmettre les informations associées à un échec à un second dispositif de réseau d'infrastructure auquel le second dispositif côté réseau appartient, les informations de TA étant utilisées pour indiquer des informations de routage concernant un premier dispositif de réseau d'infrastructure auquel le premier dispositif côté réseau appartient, dans le cas où le premier dispositif côté réseau et le second dispositif côté réseau sont des dispositifs côté réseau appartenant à différents dispositifs de réseau d'infrastructure ;
dans lequel le premier module de réception (71) est en outre configuré pour recevoir un message de liaison montante transportant dans celui-ci un conteneur inter-RAT correspondant à une RAT à laquelle le premier dispositif côté réseau appartient à partir de l'UE, dans le cas où le premier dispositif côté réseau et le second dispositif côté réseau sont des dispositifs côté réseau appartenant à différentes RAT,
dans lequel le dispositif de traitement d'informations est configuré pour recevoir les informations associées à un échec fournies dans le conteneur inter-RAT et/ou les informations associées à un échec fournies à une position dans le message de liaison montante autre que le conteneur inter-RAT.

11. Dispositif de traitement d'informations selon la revendication 10, dans lequel les informations associées à un échec générées lorsque l'échec a lieu dans l'UE comprend un quelconque parmi :
des informations associées à un échec générées lorsqu'un échec de liaison radio (RLF) a lieu dans l'UE,
des informations associées à un échec générées lorsqu'un échec de transfert (HOF) a lieu dans l'UE,
des informations associées à un échec générées lorsqu'un échec d'établissement de connexion (CEF) a lieu dans l'UE, ou
des informations associées à un échec générées lorsqu'un échec de reprise de connexion a lieu dans l'UE.

12. Dispositif de traitement d'informations selon la revendication 10, dans lequel les informations de TA comprennent un code de zone de suivi (TAC) ou un identifiant de zone de suivi (TAI).
